# EUROPEAN PATENT APPLICATION

(11) **EP 4 813 958 A1**
(43) Date of publication of application: **30.09.2026**
(21) Application number: 24894453.0
(22) Date of filing: 04.11.2024
(51) Int. Cl.: C04B 35/587, C04B 35/626, C04B 35/64

(54) **HIGH-PROCESSABILITY SILICON NITRIDE CERAMIC COMPOSITE AND MANUFACTURING METHOD THEREOF**

(30) Priority: 22.11.2023 KR 20230163849; 19.04.2024 KR 20240052899
(71) Applicant: Kowel Co., Ltd., Yangsan-si, Gyeongsangnam-do 50567 (KR)
(72) Inventor: LEE, Kyung Hoon, Yangsan-si Gyeongsangnam-do 50561 (KR); KIM, Jun Tae, Busan 48752 (KR); SUNG, Dok Kyu, Yangsan-si Gyeongsangnam-do 50643 (KR)
(74) Representative: RGTH
(86) International application number: PCT/KR2024/017177
(87) International publication number: WO 2025/110559

(57) **Abstract**

The present disclosure relates to a high-processability silicon nitride ceramic composite and a manufacturing method thereof. More specifically, proposed are a high-processability silicon nitride ceramic composite and a manufacturing method thereof, the high-processability silicon nitride ceramic composite including silicon nitride particles having an average diameter of 0.1 to 10 µm, silicon nitride nanoparticles positioned in voids between the silicon nitride particles and having an average diameter of 1 to 50 nm, and a sintering aid, in which the silicon nitride particles, the silicon nitride nanoparticles, and the sintering aid are presented at a molar ratio of 80 to 95: 2 to 20: 5 to 20, such that the silicon nitride particles and the silicon nitride nanoparticles form a dense microstructure and control surface roughness.

## Description

### Technical Field

The present disclosure relates generally to a high-processability silicon nitride ceramic composite and a manufacturing method thereof. More specifically, the present disclosure relates to a high-processability ceramic composite and a manufacturing method thereof, in which silicon nitride particles and silicon nitride nanoparticles form a dense microstructure, thereby providing high strength while simultaneously improving surface roughness and enhancing processability.

### Background Art

Since ceramics exhibit lower fracture toughness compared to metallic and polymeric materials, their mechanical properties are highly sensitive to microscopic imperfections present on the surface or within the interior of the material, often leading to catastrophic failure. Additionally, ceramics are vulnerable to mechanical and thermal shock and are inherently difficult to process. Consequently, various properties of ceramics are strongly dependent on the microstructure governed by the manufacturing process, which is a fundamental constraint. Therefore, in order to enable the widespread practical application of ceramics as structural materials, it is essential to improve or overcome these brittle characteristics.

Furthermore, enhancing the strength and toughness of materials requires the elimination of major defects that act as origins of fracture, among which surface defects are most critical and should be addressed first. Surface roughness, in this context, refers to fine irregularities ( 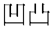 ) formed at a microscopic scale, primarily influenced by factors such as the geometry of a cutting tool's tip and the feed rate. With advancements in processing technologies and the increasing sophistication of products in industries such as semiconductors and aerospace, the influence of surface roughness on product quality has become increasingly significant. This is because machined surfaces are generally produced by conventional metal finishing processes such as turning, milling, grinding, lapping, and honing, and surface roughness is one of the most sensitive indicators reflecting even minor variations during processing.

However, most engineering ceramic materials are polycrystalline bodies, consisting of fine grains obtained through powder compaction followed by sintering. The mechanical properties of such polycrystalline ceramics, including strength and toughness, are influenced by various microstructural parameters such as phase ratio, morphology, and spatial distribution of constituent crystalline grains and voids. Furthermore, ceramics are typically multi-component systems, and their microstructures change significantly depending on numerous variables, including the characteristics of starting powders, as well as processing conditions including temperature, pressure, and atmospheric environment. As a result, achieving precise control over the microstructure remains a significant technical challenge.

Meanwhile, silicon nitride (Si₃N₄) ceramics possess excellent properties such as strength retention at elevated temperatures, wear resistance, and corrosion resistance, making them suitable for use under high-temperature and harsh environmental conditions. Accordingly, major applications of silicon nitride ceramics include bearings, ceramic cutting tools, and various wear-resistant components. In industrial fields, silicon nitride is widely utilized for wear-resistant and high-temperature applications. Industrial ceramic products used in these fields are classified by application, such as for steel processing, forming, bearings, and welding.

In particular, silicon nitride ceramic bearings maintain sufficient strength even at temperatures exceeding 1000°C and exhibit advantages such as low density, high hardness, and excellent electrical insulation. Ceramic bearing balls are classified into 11 grades, ranging from G3 to G200, according to ISO international standards, based on the accuracy of their shape and surface roughness levels. For example, G5-grade bearing balls must meet the following criteria: ball diameter variation of 0.13 µm or less, deviation from spherical form of 0.13 µm, and surface roughness of 0.014 µm Ra or less. Therefore, ceramic bearing balls demand exceptionally high shape accuracy and surface roughness, necessitating the development of suitable processing methods.

In this regard, Korean Patent No. 10-1852040 (entitled "Machinable Ceramic Composite Material and Manufacturing Method of the Same") discloses a method for manufacturing a machinable ceramic composite in which boron nitride powder is additionally incorporated to improve the processability of silicon nitride, while yttria and alumina are employed as sintering aids. However, such a boron nitride (BN)-containing machinable ceramic composite suffers from limitations such as difficulty in sintering and the inability to fundamentally resolve the problem of ceramic processability arising from the inherent high brittleness and hardness of ceramics.

Accordingly, the present inventors have completed the present disclosure based on the finding that, in the course of manufacturing a silicon nitride ceramic composite through a sintering process using Si₃N₄ powder, a dense microstructure could be formed by regulating the particle size of the silicon nitride powder, thereby effectively controlling the surface roughness of the resulting ceramic composite.

### Disclosure

### Technical Problem

Accordingly, one objective of the present disclosure is to provide a high-processability silicon nitride ceramic composite including silicon nitride particles, silicon nitride nanoparticles, and a sintering aid, in which a dense microstructure is formed to thereby increase strength while reducing surface roughness.

Furthermore, another objective of the present disclosure is to provide a manufacturing method of the aforementioned high-processability silicon nitride ceramic composite.

### Technical Solution

In order to accomplish the above objective,
the present disclosure provides a high-processability silicon nitride ceramic composite, including: silicon nitride particles having an average diameter of 0.1 to 10 µm; silicon nitride nanoparticles positioned in voids between the silicon nitride particles and having an average diameter of 1 to 50 nm; and a sintering aid,
in which the silicon nitride particles, the silicon nitride nanoparticles, and the sintering aid may be presented at a molar ratio of 80 to 95: 2 to 20: 5 to 20, such that the silicon nitride particles and the silicon nitride nanoparticles may form a dense microstructure and control surface roughness.

In the present disclosure, the surface roughness may be a maximum of 0.10 µm.

Furthermore, in order to achieve the other objective, the present disclosure provides a manufacturing method of the high-processability silicon nitride ceramic composite described above.

Preferably, the manufacturing method of the high-processability silicon nitride ceramic composite may include:
preparing a ceramic raw material mixture by adding and stirring a ceramic raw material powder in a dispersion solvent, followed by further adding and stirring an organic binder;
pulverizing and mixing the ceramic raw material mixture via a milling process to form a ceramic raw material slurry;
spray-drying the ceramic raw material slurry to form ceramic granules;
compacting the ceramic granules by application of pressure to form a ceramic green body; and
heat-treating the ceramic green body to remove the organic binder, followed by sintering the green body to form a ceramic composite.

Additionally, in the present disclosure, the forming of the ceramic granules includes:
spray-drying the ceramic raw material slurry at 100°C to 200°C.

Additionally, in the present disclosure, in the forming of the ceramic composite, the sintering may be performed at 1500°C to 2500°C for 2 to 24 hours.

### Advantageous Effects

In a silicon nitride ceramic composite of the present disclosure, silicon nitride nanoparticles are positioned in voids between silicon nitride particles to form a dense microstructure, thereby increasing the interparticle surface area. Consequently, improvements in density and strength are achieved, while the surface morphology of the composite is densely controlled during compaction and sintering processes, leading to a remarkable reduction in surface roughness. This ensures low surface roughness after ceramic processing, resulting in enhanced reliability in applications requiring precise control characteristics, such as leak control.

Additionally, according to the present disclosure, by the inclusion of silicon nitride nanoparticles, it is possible to manufacture a high-processability silicon nitride ceramic composite with excellent mechanical properties and enhanced processability.

### Description of Drawings

FIG. 1 conceptually illustrates the structure of a ceramic composite containing silicon nitride nanoparticles and silicon nitride particles according to the present disclosure.
FIG. 2 illustrates a process for manufacturing a high-processability ceramic composite according to the present disclosure.
FIG. 3 illustrates images of specimens according to Examples and Comparative Examples of the present disclosure.
FIG. 4 illustrates images showing the surface roughness of the specimens according to Examples and Comparative Examples of the present disclosure.
FIG. 5 illustrates graphs showing the test results of ceramic composites manufactured by applying uniaxial pressing according to an embodiment of the present disclosure.
FIG. 6 illustrates graphs showing the test results of ceramic composites manufactured by applying cold isostatic pressing (CIP) after uniaxial pressing according to an embodiment of the present disclosure.

### Mode for Invention

Hereinafter, the present disclosure will be described in detail.

As used herein, when any part "includes" or "contains" any element, this indicates that other elements are not excluded but may be further included unless otherwise specifically mentioned.

In one aspect, the present disclosure relates to a high-processability silicon nitride ceramic composite, including: silicon nitride particles having an average diameter of 0.1 to 10 µm; silicon nitride nanoparticles positioned in voids between the silicon nitride particles and having an average diameter of 1 to 50 nm; and a sintering aid, in which the silicon nitride particles, the silicon nitride nanoparticles, and the sintering aid are presented at a molar ratio of 80 to 95: 2 to 20: 5 to 20, such that the silicon nitride particles and the silicon nitride nanoparticles form a dense microstructure and control surface roughness.

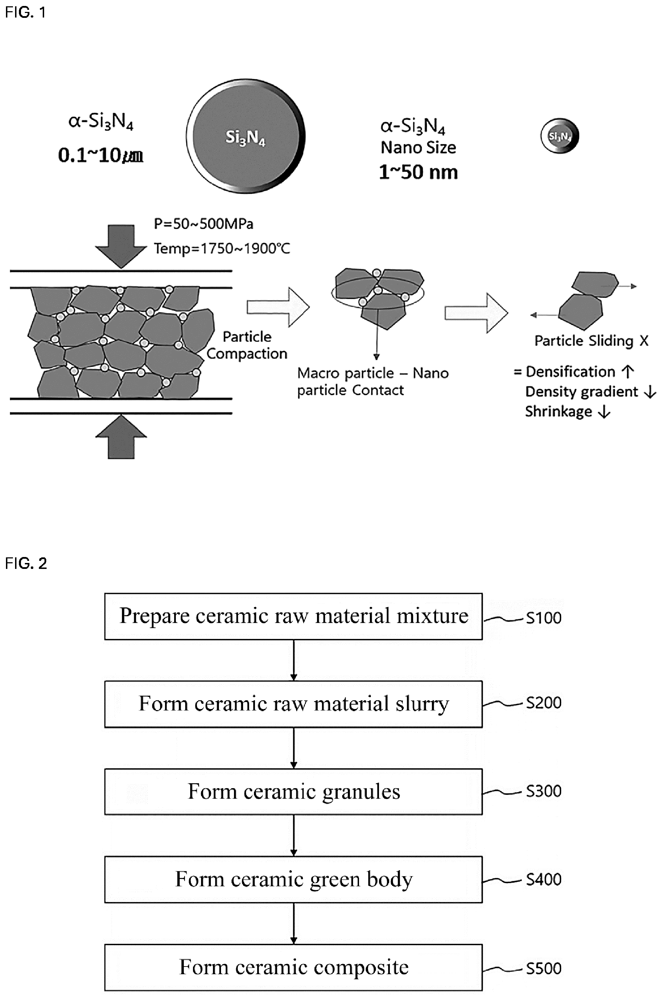

FIG. 1 is a conceptual diagram showing a process for manufacturing a high-processability ceramic composite using silicon nitride nanoparticles according to the present disclosure. Referring to this figure, the silicon nitride ceramic composite of the present disclosure is formed by compaction with silicon nitride nanoparticles positioned in voids between silicon nitride particles, followed by sintering. Accordingly, the silicon nitride particles and the silicon nitride nanoparticles form a dense microstructure in the composite to fill the voids, thereby lowering surface roughness and reducing surface defects, which in turn improves processability.

At this time, the surface roughness is preferably a maximum of 0.10 µm, and more preferably equal to or less than 0.08 µm. When the surface roughness exceeds the above-described range, the surface quality may not be sufficiently improved, making it difficult to achieve the effect of enhanced processability.

Additionally, the silicon nitride composite may have a flexural strength of at least 500 MPa and a Vickers hardness of 1700 to 1900 HV. This is attributable to the densification of the microstructure induced by the silicon nitride nanoparticles. Accordingly, the composite of the present disclosure improves both processability and mechanical properties by reducing surface roughness while simultaneously enhancing flexural strength and Vickers hardness.

At this time, in the composite of the present disclosure, which is formed by sintering while the silicon nitride nanoparticles are positioned in the voids between the silicon nitride particles, it is important to control the molar ratio between the silicon nitride particles and the silicon nitride nanoparticles. Accordingly, the silicon nitride particles, the silicon nitride nanoparticles, and the sintering aid are preferably presented at a molar ratio of 80 to 95: 2 to 20: 5 to 20. More preferably, the molar ratio may be 80 to 95: 2 to 10: 5 to 15, and most preferably 85 to 95: 2 to 7: 5 to 10. When the content of the silicon nitride nanoparticles falls below the above-described range, the proportion of the silicon nitride particles relatively increases, resulting in a reduction in the void-filling effect provided by the silicon nitride nanoparticles. Consequently, a dense microstructure cannot be sufficiently formed, thereby deteriorating structural stability and increasing surface roughness. Additionally, when the content of the silicon nitride nanoparticles exceeds the above-described range, the excessive proportion of the silicon nitride nanoparticles may lead to an increase in surface roughness during the sintering process due to the nanoparticles and/or the sintering aid, and also result in problems such as increased complexity and cost of the sintering process. Furthermore, when the content of the sintering aid falls below the above-described range, densification of the ceramic composite during sintering becomes insufficient. On the other hand, when the content exceeds the above-described range, high-temperature properties such as high-temperature strength and oxidation resistance may be significantly deteriorated, which is undesirable.

Additionally, in the present disclosure, the silicon nitride particles preferably have an average diameter of 0.1 to 10 µm, more preferably 0.1 to 3 µm, and most preferably 0.01 to 1 µm. This is because, when the average diameter of the silicon nitride particles is excessively small, the bonding force with the nanoparticles may decrease due to a reduction in driving force. On the other hand, when the average diameter is excessively large, the void-filling effect provided by the nanoparticles may become insufficient, which may lead to problems such as void formation or surface defects.

Additionally, in the present disclosure, the sintering aid is preferably a metal belonging to the group of alkaline earth metals, rare earths, transition metals, and typical metals, or an oxide thereof. More preferably, it may include at least one selected from the group consisting of yttrium (Y), magnesium (Mg), zirconium (Zr), titanium (Ti), calcium (Ca), copper (Cu), gadolinium (Gd), lanthanum (La), neodymium (Nd), ytterbium (Yb), scandium (Sc), silicon (Si), lutetium (Lu), erbium (Er), dysprosium (Dy), vanadium (V), chromium (Cr), manganese (Mn), hafnium (Hf), tantalum (Ta), bismuth (Bi), actinium (Ac), oxides thereof; the group consisting of aluminum (Al) and nitrides thereof; calcium carbonate; and calcium fluoride. Preferably, it may include at least one selected from the group consisting of yttrium (Y), magnesium (Mg), zirconium (Zr), titanium (Ti), aluminum (Al), and oxides thereof. More preferably, it may include yttrium oxide (Y₂O₃) and magnesium oxide (MgO).

As described above, according to the present disclosure, by controlling the size and molar ratio of the silicon nitride particles and the silicon nitride nanoparticles, the surface roughness of the ceramic composite is reduced, thereby improving processability. Accordingly, it is possible to overcome disadvantages caused by the inherently high brittleness of ceramic composites during processing and to enhance reliability in applications requiring precise control characteristics.

FIG. 2 illustrates a process for manufacturing the high-processability ceramic composite according to the present disclosure. In another aspect, the present disclosure provides a manufacturing method of the high-processability silicon nitride ceramic composite described above. The manufacturing method of the high-processability silicon nitride ceramic composite according to the present disclosure includes the following steps: preparing a ceramic raw material mixture by adding and stirring a ceramic raw material powder in a dispersion solvent, followed by further adding and stirring an organic binder (S100); pulverizing and mixing the ceramic raw material mixture via a ball milling process to form a ceramic raw material slurry (S200); spray-drying the ceramic raw material slurry to form ceramic granules (S300); compacting the ceramic granules by application of pressure to form a ceramic green body (S400); and heat-treating the ceramic green body to remove the organic binder, followed by sintering the green body to form a ceramic composite (S500).

First, the step of preparing the ceramic raw material mixture (S100) is a preliminary step for forming a ceramic slurry and involves mixing raw materials. This is accomplished by adding the ceramic raw material powder to and mixed with a dispersion solvent through stirring, followed by further addition and stirring of an organic binder. It is important that the ceramic raw material powder is first introduced into the dispersion solvent and uniformly mixed so as to prevent agglomeration of the powder. Thereafter, the organic binder is additionally introduced to enable uniform mixing through the action of the binder.

At this time, the ceramic raw material powder is characterized by containing silicon nitride particles with an average diameter of 0.1 to 10 µm, silicon nitride nanoparticles with an average diameter of 1 to 50 nm, and a sintering aid at a molar ratio of 80 to 95: 2 to 20: 5 to 20.

Additionally, the dispersion solvent is preferably mixed while maintaining a constant viscosity by additionally introducing the dispersion solvent during the bead milling process to ensure the viscosity of the slurry is uniform. The dispersion solvent may include water (H₂O), alcohols such as ethanol and methanol, etc.

Additionally, the organic binder may include acrylic resins such as polyacrylic acid ester and polymethacrylic acid ester; cellulose-based resins such as methylcellulose, hydroxymethyl cellulose, nitrocellulose, and cellulose acetate butyrate; vinyl group-containing resins such as polyvinyl butylaldehyde, polyvinyl alcohol, and polyvinyl chloride; hydrocarbon resins such as polyolefin; and oxygen-containing resins such as polyethylene oxide. These may be used alone, or two or more of these may be used in combination. By additionally introducing the organic binder as described above, the raw material powder is uniformly dispersed within the slurry. At this time, the organic binder is mixed in an amount of 0.01 to 3 parts by weight per 100 parts by weight of the ceramic raw material powder. The organic binder may include polyvinyl alcohol, etc.

Next, the step of forming the ceramic raw material slurry (S200) includes pulverizing and mixing the raw material mixture through a milling process to form a slurry. In this step, the milling process may be performed using any method, whether wet or dry, as long as it enables uniform mixing of the silicon nitride particles, the silicon nitride nanoparticles, and the sintering aid within the solvent. Known methods such as a rotary mill, barrel mill, vibratory mill, and ball mill may be used. Among these, a ball mill is preferred.

Next, the step of forming the ceramic granules (S300) is performed by spray-drying the ceramic slurry. The factor that most significantly contributes to volumetric shrinkage during sintering of silicon nitride is the density gradient of the green body. Accordingly, controlling the composition and size of the initial particles is important to minimize the density gradient. In this step, the ceramic raw material slurry containing silicon nitride nanoparticles is spray-dried at high temperature and high speed, whereby granules are formed in a structure in which the silicon nitride nanoparticles fill internal voids between the silicon nitride particles. This allows for the control of granule powder size growth, thereby enabling the production of ceramic granules having a fine powder size. The granule powder obtained in this step preferably has a diameter of 30 to 170 µm, and more preferably 70 to 100 µm. This granule powder exhibits an agglomerated structure in which the silicon nitride nanoparticles are filled within the voids between the silicon nitride particles.

The spray drying is preferably performed at a high temperature of 100°C to 200°C. More preferably, the spray drying may be carried out under high-temperature and high-speed conditions of an inlet temperature of 100°C to 200°C, an outlet temperature of 60°C to 100°C, a disc rotation speed of 5000 to 12,000 rpm, and a slurry feed rate of 0.01 to 2 L/min.

Next, the step of forming the ceramic green body (S400) includes compacting the ceramic granules by application of pressure. At this time, as the compaction method, known techniques such as press molding, cast molding, extrusion molding, injection molding, veneer molding, cold isostatic pressing (CIP), and uniaxial pressing may be employed.

Among these, uniaxial pressing and CIP are preferred. At this time, either one of the compaction processes may be used alone, or a two-step compaction process may be sequentially performed. In examples of the present disclosure, both the uniaxial pressing process and the two-step compaction process including uniaxial pressing followed by CIP exhibited a surface roughness of equal to or less than 0.1 µm, a flexural strength of equal to or greater than 500 MPa, and a Vickers hardness of 1700 to 1900 HV. This indicates that such physical properties, including surface roughness, flexural strength, and hardness, were achieved due to the densified microstructure resulting from the composite composition containing silicon nitride nanoparticles. Accordingly, it suggests that the application of an appropriate level of pressing pressure is more important than the specific compaction method itself. The appropriate level of pressing pressure as described herein refers to a pressure level at which compaction defects such as lamination do not occur. The pressure is preferably applied within a range of 500 to 3000 kgf. More preferably, uniaxial pressing may be performed at 500 to 2000 kgf, while CIP may be performed at 1000 to 3000 kgf.

Next, the step of forming the ceramic composite (S500) includes heat-treating the ceramic green body to remove the organic binder, followed by sintering the green body to form a sintered body. In this step, the ceramic green body first undergoes a debinding process in which the organic binder is removed through heat treatment. Following the debinding process, the green body is subjected to sintering, during which the silicon nitride particles and the silicon nitride nanoparticles form a dense microstructure. As a result, the surface morphology of the sintered body is precisely controlled, thereby enabling the production of a silicon nitride sintered body with reduced surface roughness. Through the sintering process, the interfacial surface area between the silicon nitride particles and the silicon nitride nanoparticles is increased, thereby increasing density and improving strength. Additionally, the formation of fine β-Si₃N₄ phases is promoted, resulting in enhanced processability.

The debinding process by the heat treatment described above is preferably performed under vacuum at a temperature of 400°C to 700°C for 7 to 15 hours.

Additionally, the sintering method for the green body is not particularly limited as long as it enables densification of the resulting sintered body, and any method known to those skilled in the art is possible. Preferably, gas pressure sintering, pressureless sintering, or reaction sintering may be performed. Among these, gas pressure sintering is more preferred.

Specifically, the gas pressure sintering may be employed, and the ceramic green body, from which the organic binder, etc. has been removed through the debinding process, is preferably sintered at 1500°C to 2500°C for 2 to 24 hours. More preferably, the sintering may be performed at 1700°C to 2000°C for 2 to 10 hours. The reason for gas pressure sintering the green body within the above-described temperature range is that temperatures below or above the range may not provide a sufficiently complete densification effect for the green body. At this time, the gas used in the sintering process may include an inert gas such as argon (Ar) and helium (He) or nitrogen (N₂) gas.

Hereinafter, the present disclosure will be described in more detail with reference to preferred examples. Rather, these examples are provided to aid a better understanding of the disclosure, and it will be obvious to those skilled in the art that the scope of the disclosure is not limited by the examples.

### <Examples and Comparative Examples>

### Production of Ceramic Composite Granules

Using silicon nitride (Si₃N₄) ceramic powder as a primary raw material, the powder was blended with sintering aids (Al₂O₃/Y₂O₃/MgO). The basic composition ratio consisted of 93 mol% Si₃N₄, 2 mol% Y₂O₃, and 5 mol% MgO. In comparative examples, alumina (Al₂O₃) was additionally incorporated, whereas in examples of the present disclosure, silicon nitride nanoparticles were incorporated instead. In each case, the molar ratio of the silicon nitride ceramic powder was adjusted such that the total composition of the ceramic raw materials was maintained at 100 mol%. The particle sizes (D50) of the silicon nitride ceramic powder and the ceramic nanoparticles used in the raw material composition were 0.7 µm and 20 nm, respectively.

The ceramic raw materials were introduced into a solvent and mixed, followed by addition of a dispersant. Thereafter, the mixture was ball-milled to form a slurry in which the raw materials were homogeneously dispersed in the solvent. The ball milling process was carried out at 200 rpm for at least 12 hours.

Subsequently, the appearance of the slurry was visually inspected and the viscosity was measured to determine whether spray drying was feasible. Thereafter, spray drying was performed to form composite granules. The spray drying was conducted under high-speed and high-temperature conditions in which the raw material feed rate was 180 mL/min, the atomizer speed was 1800 rpm, and the temperature was 120°C. The resulting ceramic granules were visually examined for agglomeration and impurities, and their appearance and particle size were further evaluated using a microscope.

As a result, the formed ceramic granules all exhibited particle morphologies comparable to those of commercially available ceramic granule powders, and no defects were observed in the particle morphology.

Subsequently, molding and sintering processes were performed using the formed ceramic granules.

### Molding and Sintering of Ceramic Granules

The formed granules were subjected to uniaxial pressing under a pressure of 800 to 1,500 kgf to form a ceramic green body. As an alternative compaction method, a ceramic green body was also formed by performing a cold isostatic pressing (CIP) process after uniaxial pressing. The pressing pressure of the CIP was applied at 2000 kgf for 5 minutes.

Subsequently, the green body was heated at 600°C for 12 hours under vacuum to perform a debinding process.

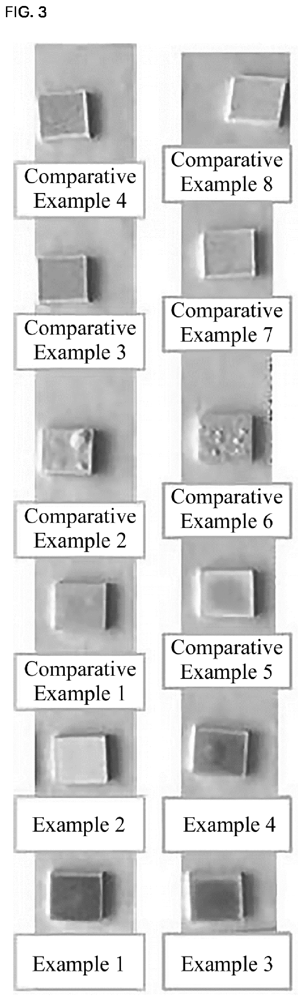

After completion of the debinding process, the green body was subjected to a sintering process using a gas pressure sintering (GPS) furnace, thereby finally obtaining an α-Si₃N₄ composite. Images of the obtained composite specimens are shown in FIG. 3.

The sintering conditions were as follows:
- Heating rate: Avg. 5°C/min
- Peak temperature: 1900°C
- Peak temperature holding time: 4 hr
- Gas: N₂

### Evaluation of Physical Properties of Ceramic Composites

The surface roughness, Vickers hardness, flexural strength, and bulk density of the ceramic composites manufactured above were measured. The measurement methods for each parameter were as follows:
- Surface roughness: The surface roughness of the specimens was measured after polishing using SiC papers. The polishing process was sequentially performed using SiC papers in the order of #230 → #500 → #1000 → #2400.
- Vickers hardness: Measurements were conducted using a micro-Vickers hardness tester under an indentation load condition of 0.5 kgf (in accordance with KS L ISO 14705).
- Flexural strength: Room-temperature flexural strength was measured through a three-point bending test. The three-point flexural strength was evaluated under a crosshead speed condition of 0.5 mm/min (in accordance with KS L ISO 17565).
- Bulk density: Bulk density was measured via the Archimedes' method.

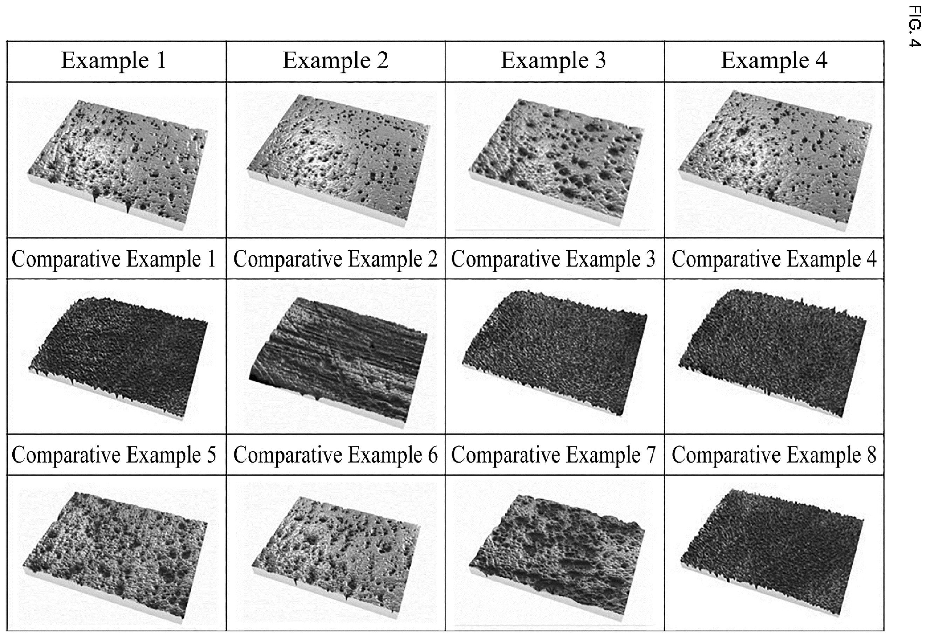

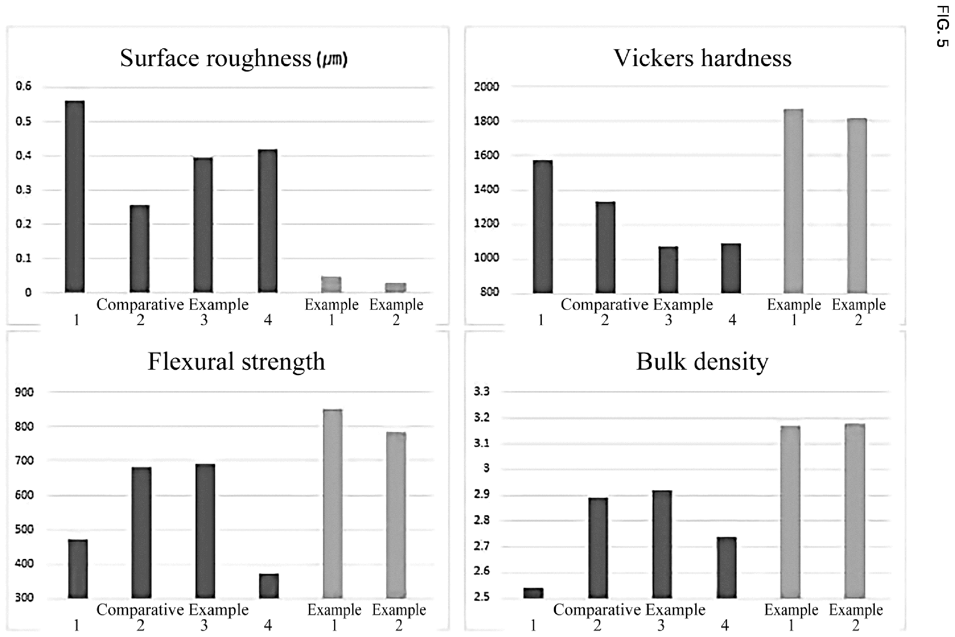

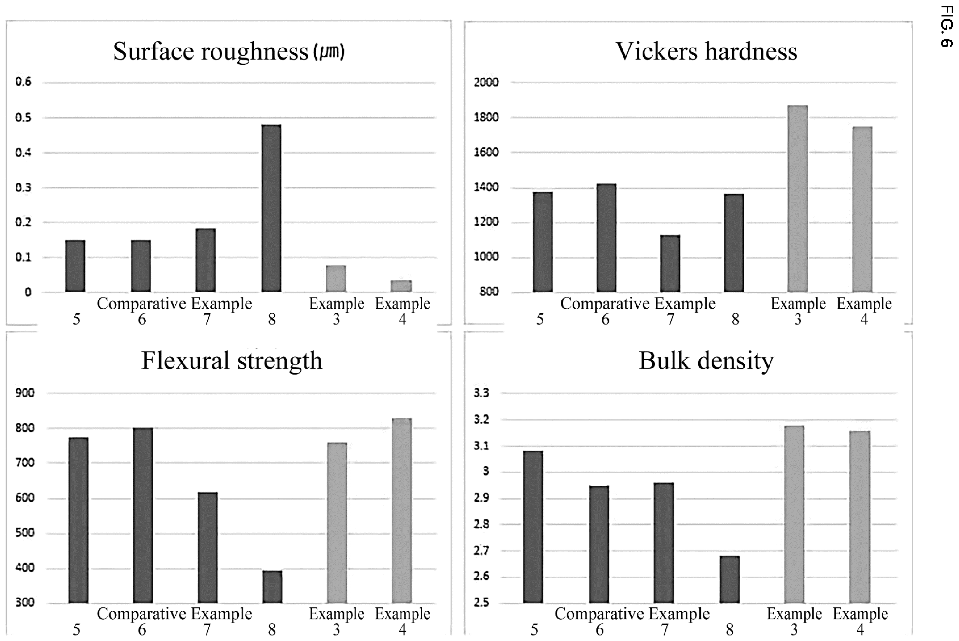

The composition ratios and physical property evaluation results of the specimens according to the examples and comparative examples having different compositional formulations are presented in FIGS. 3 to 6 and Tables 1 and 2 below. Specifically, FIG. 3 depicts images of each specimen, FIG. 4 depicts images showing the surface roughness of each specimen, Table 1 and FIG. 5 present the results of the examples and comparative examples in which only the uniaxial pressing process was performed during compaction, and Table 2 and FIG. 6 present the results of the examples and comparative examples in which both the uniaxial pressing and CIP processes were performed.

**Table 1**

| Classification | | | Examples | | Comparative Examples | | | |
|---|---|---|---|---|---|---|---|---|
| | | | 1 | 2 | 1 | 2 | 3 | 4 |
| Composition (molar ratio) | Silicon nitride microparticles (µm) | | 90 | 87 | 93 | 91 | 89 | 87 |
| | Sintering aid | Y₂O₃ | 2 | 2 | 2 | 2 | 2 | 2 |
| | | MgO | 5 | 5 | 5 | 5 | 5 | 5 |
| | | Al₂O₃ | 0 | 0 | 0 | 2 | 4 | 6 |
| | Silicon nitride nanoparticles (nm) | | 3 | 6 | 0 | 0 | 0 | 0 |
| Physical properties | Surface roughness (µm) | | 0.048 | 0.03 | 0.561 | 0.256 | 0.396 | 0.419 |
| | Vickers hardness (HV0.5) | | 1875.3 | 1819.5 | 1574.9 | 1336.1 | 1073.1 | 1090.7 |
| | Flexural strength (MPa) | | 852 | 786 | 473 | 682 | 690 | 373 |
| | Bulk density (g/cm³) | | 3.17 | 3.18 | 2.54 | 2.89 | 2.92 | 2.74 |

**Table 2**

| Classification | Examples | | Comparative Examples | | | | | |
|---|---|---|---|---|---|---|---|---|
| | 3 | 4 | 5 | 4 | 6 | 8 | | |
| Composition (molar ratio) | Silicon nitride microparticles (µm) | | 90 | 87 | 93 | 91 | 89 | 87 |
| | Sintering aid | Y₂O₃ | 2 | 2 | 2 | 2 | 2 | 2 |
| | | MgO | 5 | 5 | 5 | 5 | 5 | 5 |
| | | Al₂O₃ | 0 | 0 | 0 | 2 | 4 | 6 |
| | Silicon nitride nanoparticles (nm) | | 3 | 6 | 0 | 0 | 0 | 0 |
| Physical properties | Surface roughness (µm) | | 0.076 | 0.034 | 0.149 | 0.149 | 0.183 | 0.48 |
| | Vickers hardness (HV0.5) | | 1875.3 | 1752.9 | 1373.3 | 1424 | 1129.4 | 1362.2 |
| | Flexural strength (MPa) | | 760 | 830 | 775 | 803 | 619 | 395 |
| | Bulk density (g/cm³) | | 3.18 | 3.16 | 3.08 | 2.95 | 2.96 | 2.68 |

Referring to Table 1 above, FIG. 3, and FIG. 4, Examples 1 and 2, which additionally contained Si₃N₄ nanoparticle powder, exhibited surface roughness values of 0.048 µm and 0.03 µm, respectively, confirming that the surface roughness was significantly lower compared to Comparative Examples 1 to 4.

In Comparative Examples 1 to 4, the surface roughness gradually decreased as the mol% content of alumina increased. Specifically, while Comparative Example 1 containing 0 mol% alumina exhibited a surface roughness of 0.561 µm, Comparative Example 4 containing 6 mol% alumina showed a reduced surface roughness of 0.419 µm. This indicates that alumina provided a certain degree of improvement in processability.

However, when comparing Comparative Example 4 with Example 2, in which 6 mol% silicon nitride nanoparticles were incorporated instead of alumina, the surface roughness was reduced to approximately 1/13 of that of Comparative Example 4, thereby confirming a significant improvement in processability. In further comparison with Comparative Example 1 containing no alumina, the surface roughness was reduced to approximately 1/18, demonstrating that the composite composition containing silicon nitride nanoparticles was able to remarkably reduce surface roughness and improve processability.

Additionally, regarding the flexural strength, the Examples all exhibited flexural strengths of equal to or greater than 500 MPa, whereas Comparative Examples 1 and 4 failed to satisfy this level. Similarly, the Vickers hardness was found to be equal to or greater than 1800 HV in the Examples, but significantly lower in the Comparative Examples. That is, when the composite was manufactured through compaction and sintering with the addition of silicon nitride nanoparticles, both the flexural strength and Vickers hardness were improved, while the surface quality after processing was significantly enhanced. Accordingly, it was possible to manufacture a silicon nitride composite having both excellent processability and superior mechanical properties. This is attributable to the increase in density and strength resulting from the increased interparticle surface area during compaction and sintering, as well as the formation of fine β-Si₃N₄ phases.

Furthermore, when comparing the results of Table 2, corresponding to the specimens manufactured through compaction and sintering using CIP after uniaxial pressing, with those of Table 1 above, comparison was made between Examples 1 and 2 and Examples 3 and 4, which possessed identical molar compositions. In the case of Examples 1 and 3, which contained relatively lower contents of silicon nitride nanoparticles, Example 3, which underwent the two-step pressing process exhibited a slight increase in surface roughness. However, despite this slight increase, the surface roughness remained below 0.1 µm. This indicates that, as long as an appropriate compaction process is applied, the nanoparticle-containing composite composition alone is sufficient to manufacture a composite exhibiting excellent physical properties, including surface roughness, hardness, and strength.

As demonstrated from the results of Tables 1 and 2 above, comparison between the Examples and Comparative Examples revealed a tendency for the surface roughness to decrease as the Vickers hardness increased. Additionally, when silicon nitride nanoparticles were further incorporated, the microstructure became denser under identical sintering conditions, resulting in increased bulk density compared to compositions not containing the nanoparticles.

That is, in the silicon nitride ceramic composite of the present disclosure, silicon nitride nanoparticles are positioned in voids between silicon nitride particles to form a dense microstructure, thereby increasing the interparticle surface area. Consequently, improvements in density and strength are achieved, while the surface morphology of the composite is densely controlled during the compaction and sintering processes, leading to a remarkable reduction in surface roughness. Accordingly, the present disclosure enables the manufacture of a high-processability silicon nitride ceramic composite with excellent mechanical properties and enhanced processability. This ensures low surface roughness after ceramic processing, resulting in enhanced reliability in applications requiring precise control characteristics, such as leak control.

The foregoing has outlined rather broadly the features and technical advantages of the present disclosure so that those skilled in the art can better understand the claims that follow. It will be understood by those skilled in the art that the disclosure can be implemented in other specific forms without changing the spirit or essential features of the disclosure. Therefore, it should be noted that the forgoing embodiments are merely illustrative in all aspects and are not to be construed as limiting the disclosure. The scope of the disclosure is defined by the appended claims rather than the detailed description of the disclosure. All changes or modifications or their equivalents made within the meanings and scope of the claims should be construed as falling within the scope of the disclosure.

## Claims

1. A high-processability silicon nitride ceramic composite, comprising:
silicon nitride particles having an average diameter of 0.1 to 10 µm;
silicon nitride nanoparticles positioned in voids between the silicon nitride particles and having an average diameter of 1 to 50 nm; and
a sintering aid,
wherein the silicon nitride particles, the silicon nitride nanoparticles, and the sintering aid are presented at a molar ratio of 80 to 95: 2 to 20: 5 to 20, such that the silicon nitride particles and the silicon nitride nanoparticles form a dense microstructure and control surface roughness.

2. The high-processability silicon nitride ceramic composite of claim 1, wherein the surface roughness is a maximum of 0.10 µm.

3. A manufacturing method of a high-processability silicon nitride ceramic composite, the manufacturing method comprising:
preparing a ceramic raw material mixture by adding and stirring a ceramic raw material powder in a dispersion solvent, followed by further adding and stirring an organic binder;
pulverizing and mixing the ceramic raw material mixture via a milling process to form a ceramic raw material slurry;
spray-drying the ceramic raw material slurry to form ceramic granules;
compacting the ceramic granules by application of pressure to form a ceramic green body; and
heat-treating the ceramic green body to remove the organic binder, followed by sintering the green body to form a ceramic composite,
wherein the formed ceramic composite is the high-processability silicon nitride ceramic composite of claim 1 or 2.

4. The manufacturing method of claim 3, wherein the forming of the ceramic granules comprises:
spray-drying the ceramic raw material slurry at 100°C to 200°C.

5. The manufacturing method of claim 3, wherein in the forming of the ceramic composite, the sintering is performed at 1500°C to 2500°C for 2 to 24 hours.
